(19) Europäisches Patentamt
European Patent Office
Office européen des brevets

(11) **EP 3 869 363 B1**

(12) **EUROPEAN PATENT SPECIFICATION**

(45) Date of publication and mention
of the grant of the patent:
**02.04.2025 Bulletin 2025/14**

(21) Application number: **21157767.1**

(22) Date of filing: **18.02.2021**

(51) International Patent Classification (IPC):
*G06F 21/00* *(2013.01)*        *G06F 21/55* *(2013.01)*
*G06F 21/56* *(2013.01)*

(52) Cooperative Patent Classification (CPC):
**G06F 21/566; G06F 21/552**

(54) **EMBEDDING NETWORKS TO EXTRACT MALWARE FAMILY INFORMATION**

EINBETTUNG VON NETZWERKEN ZUR EXTRAKTION VON INFORMATIONEN DER MALWARE-FAMILIE

INCORPORATION DE RÉSEAUX POUR EXTRAIRE DES INFORMATIONS DE LA FAMILLE DES MALICIELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2020 US 202062978069 P**
**17.02.2021 US 202117177220**

(43) Date of publication of application:
**25.08.2021 Bulletin 2021/34**

(73) Proprietor: **CrowdStrike, Inc.**
**Sunnyvale, CA 94086 (US)**

(72) Inventor: **ELKIND, David**
**Irvine, CA 92618 (US)**

(74) Representative: **Murgitroyd & Company**
**165-169 Scotland Street**
**Glasgow G5 8PL (GB)**

(56) References cited:
**US-A1- 2019 065 746        US-A1- 2020 005 082**
**US-A1- 2020 364 338**

• **OMID E. DAVID ET AL: "DeepSign: Deep learning for automatic malware signature generation and classification", 2015 INTERNATIONAL JOINT CONFERENCE ON NEURAL NETWORKS (IJCNN), 1 July 2015 (2015-07-01), pages 1 - 8, XP055458122, ISBN: 978-1-4799-1960-4, DOI: 10.1109/IJCNN.2015.7280815**

EP 3 869 363 B1

## Description

This application claims priority to U.S. Patent Application No. 62/978,069 filed February 18, 2020, and U.S. Patent Application 17/177,220 filed February 17, 2021 each entitled "EMBEDDING NETWORKS TO EXTRACT MALWARE FAMILY INFORMATION,".

## BACKGROUND

In computer security, the detection of malware is perennially a challenging problem, as malware is designed to evade known detection methods by eliminating, obfuscating, or concealing known discriminating features by which malware may be distinguished from benign software. With every such evasive change in malware design, security experts must identify new discriminating features which are common to at least some families of malware, while being absent from benign software. Antivirus software and other such computer-executable applications may be installed on computing systems and programmed with computer-executable instructions to recognize these discriminating features, so as to halt the execution of malware to prevent compromising of computing system functionality.

Security experts may be able to successfully identify discriminating features of malware through manual inspection of malware samples to conduct feature engineering, though such feature engineering is a high-cost endeavor due to levels of expertise required. Security services which provide rapid and adaptive recognition of malware are increasingly important, with the growth of malware which renders recovery of system functionality after infection greatly onerous or impossible. Thus, it is desirable to enable computing systems to recognize discriminating features of malware without human intervention.

Machine learning technologies may be deployed to enable computing systems to be trained to recognize discriminating features of malware from samples of known malware and known benign software, and thereby classify previously unseen computer-executable applications as either malware or benign. Such machine learning technologies are still at a nascent stage, and it is desirable to improve the robustness of such machine learning as applied to a variety of emergent malware, not all of which may include the same discriminating features, thus rendering no single method of recognition as universally effective.

US 2019/065746 discloses a behavioral malware detection method which involves extracting features from prefetch files; classifying and detecting benign applications from malicious applications using the features of the prefetch files; and quarantining malicious applications based on the detection.

Omid E. David et al: "DeepSign: Deep learning for automatic malware signature generation and classification", 2015 International Joint Conference On Neural Networks (IJCNN), 1 July 2015, pages 1-8, XP055458122, DOI: 10.1109/IJCNN.2015.7280815 ISBN: 978-1-4799-1960-4, discloses an end-to-end method for automatic signature generation.

US 2020/005082 A1 discloses a byte n-gram embedding model, wherein each byte n-gram is a series of n bytes that occur in sequence within a particular set of binary data.

## SUMMARY

Accordingly there is provided a method, a system and a computer readable medium as detailed in the claims that follow.

## BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.

FIG. 1 illustrates an architectural diagram of a cloud computing system according to example embodiments of the present disclosure.

FIG. 2 illustrates a diagram of a classification learning model according to example embodiments of the present disclosure.

FIG. 3 illustrates a diagram of an embedding learning model according to example embodiments of the present disclosure.

FIG. 4A illustrates a flowchart of an embedding training method according to example embodiments of the present disclosure.

FIG. 4B illustrates a layout of an executable file according to example embodiments of the present disclosure.

FIG. 5 illustrates an architectural diagram of an embedding learning model according to example embodiments of the present disclosure.

FIG. 6 illustrates an example system for implementing the processes and methods described herein for implementing embedding learning models.

## DETAILED DESCRIPTION

Systems and methods discussed herein are directed to implementing feature embedding by machine learning, and more specifically training a machine learning model to embed feature vectors in a feature space which magnifies distances between discriminating features of different malware families.

A learning model, according to example embodiments of the present disclosure, may be a defined computation algorithm executable by one or more processors of a computing system to perform tasks that include processing input having various parameters and outputting results. A learning model may be, for example, a layered model such as a deep neural network, which may have a fully-connected structure, may have a feedforward structure such as a convolutional neural network ("CNN"), may have a backpropagation structure such as a recurrent neural network ("RNN"), or may have other architectures suited to the computation of particular tasks. Tasks may include, for example, classification, clustering, matching, regression, and the like.

According to example embodiments of the present disclosure, a learning model may be an embedding model. Whereas other learning models may be trained using labeled data to perform tasks as classification and the like as described above, an embedding model may be trained using labeled data to embed features of the labeled data in a feature space, and then output the feature space so that other learning models, such as a classification model, may utilize this feature space in performing their respective tasks.

Tasks such as classification, with regard to example embodiments of the present disclosure, may ultimately perform the objective of distinguishing malware from benign software. However, methods and systems according to example embodiments of the present disclosure need not reach this outcome. For the purpose of example embodiments of the present disclosure, at least a feature space may be output by one or more methods and/or systems. A feature space may be a description of an n-dimensional vector space, and one or more mappings by which vectors in real vector space $\mathbb{R}^n$ may be mapped to the n-dimensional vector space. Methods and systems according to example embodiments of the present disclosure may further output classifications of unlabeled computer-executable applications to distinguish malware from benign software; however, this is not necessary to perform the objectives of the present disclosure.

Cloud computing systems may provide collections of servers hosting computing resources to provide distributed computing, parallel computing, improved availability of physical or virtual computing resources, and such benefits. Cloud computing systems may host learning models to provide these benefits for the application of computing using learning models. To alleviate computational overhead in executing learning models on a cloud computing system, learning models may be pre-trained to provide ready-made parameters and weights which may be stored on storage of the cloud computing system and, upon execution, loaded into memory of the cloud computing system. For example, with regard to tasks relating to the function of classification, commonly available pre-trained learning models include a residual neural network ("ResNet") as known to persons skilled in the art.

A cloud computing system may connect to various end devices which forward data in association with various tasks for the computation and output of results required for the performance of those tasks. End devices may connect to the cloud computing system through edge nodes of the cloud computing system. An edge node may be any server providing an outbound connection from connections to other nodes of the cloud computing system, and thus may demarcate a logical edge, and not necessarily a physical edge, of a network of the cloud computing system. Moreover, an edge node may be edge-based logical nodes that deploy non-centralized computing resources the cloud computing system, such as cloudlets, fog nodes, and the like.

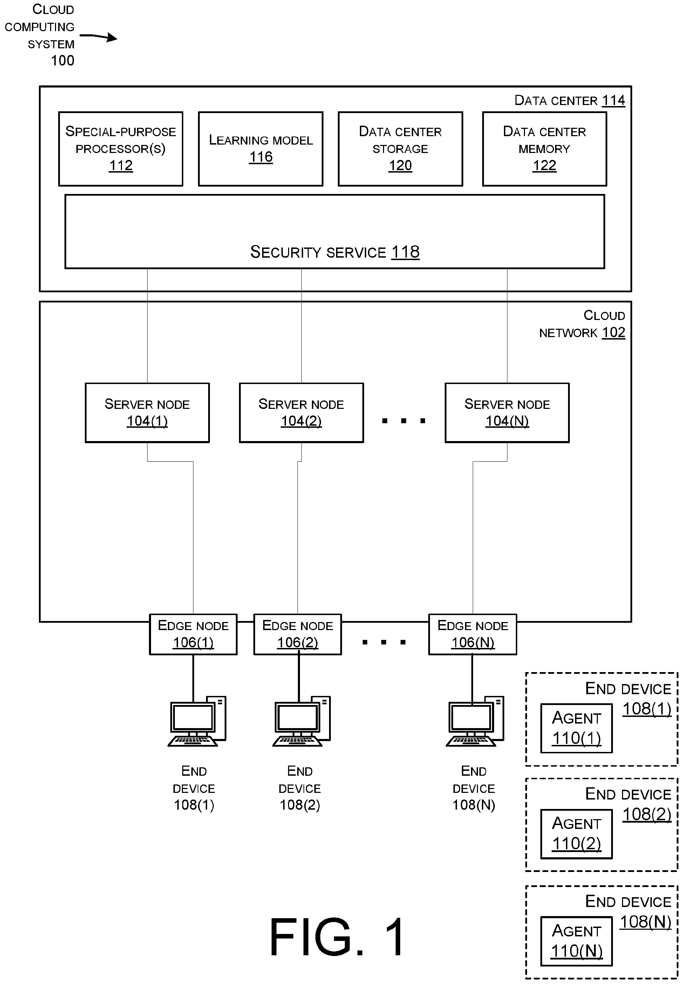

FIG. 1 illustrates an architectural diagram of a cloud computing system 100 according to example embodiments of the present disclosure. The cloud computing system 100 may be implemented over a cloud network 102 of physical or virtual server nodes 104(1), 104(2), . . ., 104(N) (where any unspecified server node may be referred to as a server node 104) connected by physical or virtual network connections. Furthermore, the cloud network 102 terminates at physical or virtual edge nodes 106(1), 106(2), . . ., 106(N) (where any unspecified edge node may be referred to as an edge node 106) located at physical and/or logical edges of the cloud network 102. The edge nodes 106(1) to 106(N) may connect to any number of end devices 108(1), 108(2), ..., 108(N) (where any unspecified end device may be referred to as an end device 108). An end device 108, such as, by way of example, end device 108(1), may run a respective instance of a security agent 110(1), 110(2), ..., 110(N) (where any unspecified security agent instance may be referred to as an agent 110). at least some of the different sensors being operative to collect heterogeneous types of data (such as images, videos, text, spoken audio, and the like).

Agents 110 may be, generally, computer-executable applications which enable, when executed by an end device 108, the end device 108 to communicate with a security service 118 over the cloud network 102 to access a variety of hosted services provided by the security service 118 to users of the end device 108. Users of the end device 108 may operate a frontend provided by the respective agent 110 running on the end device 108 so as to access the hosted services of the security service 118, including, for example, blocking security holes and security exploits; filtering inbound and outbound connections; policy enforcement; scanning and analysis of data and computer-executable files; and the like. Hosted services of the security service 118 may be performed by one or more physical or virtual processor(s) of the cloud computing system 100 in response to operations performed by, or upon, an agent 110 running on any of the end devices 108 by the exchange of data and communication between the end devices 108 and the security service 118 over the cloud network 102.

A learning model may be implemented on special-purpose processor(s) 112, which may be hosted at a data center 114. The data center 114 may be part of the cloud network 102 or in communication with the cloud network 102 by network connections. Special-purpose processor(s) 112 may be computing devices having hardware or software elements facilitating computation of neural network computing tasks such as training and inference computations. For example, special-purpose processor(s) 112 may be accelerator(s), such as Neural Network Processing Units ("NPUs"), Graphics Processing Units ("GPUs"), Tensor Processing Units ("TPU"), implementations using field programmable gate arrays ("FPGAs") and application specific integrated circuits ("ASICs"), and/or the like. To facilitate computation of tasks such as training and inference, special-purpose processor(s) 112 may, for example, implement engines operative to compute mathematical operations such as matrix operations and vector operations.

A learning model 116 may be stored on physical or virtual storage of the data center 114 ("data center storage 120"), and may be loaded into physical or virtual memory of the data center 114 ("data center memory 122") (which may be dedicated memory of the special-purpose processor(s) 112) alongside trained weight set in order for the special-purpose processor(s) 112 to execute the learning model 116 to compute input related to one or more tasks. The input may be obtained from one or more end devices 108 over a network connection from an end device 108.

Execution of the learning model 116 may then cause the data center 114 to load the learning model 116 into data center memory 122 and compute results. The learning model 116 may output results required for the performance of heterogeneous functions of the security service 118. The security service 118 hosted on the cloud computing system 100 may provide centralized computing for any number of agents 110 by acting upon results output by the learning model 116 and communicate over the cloud network 102 to cause the agents 110 running on the end devices 108 to act upon instructions derived from the results output by the learning model 116.

According to example embodiments of the present disclosure, the data center 114 may be substantially high in computing power compared to end devices 108. The data center 114 may aggregate computing resources from a variety of networked and/or distributed physical and/or virtual computing nodes, whereas end devices 108 may be individual computing systems. Thus, it is desirable to improve performance of learning models 116 at the backend of the security service 118 so as to provide responsive and accurate hosted services to end devices 108, leading to heightened security of user computing systems embodied by the end devices 108.

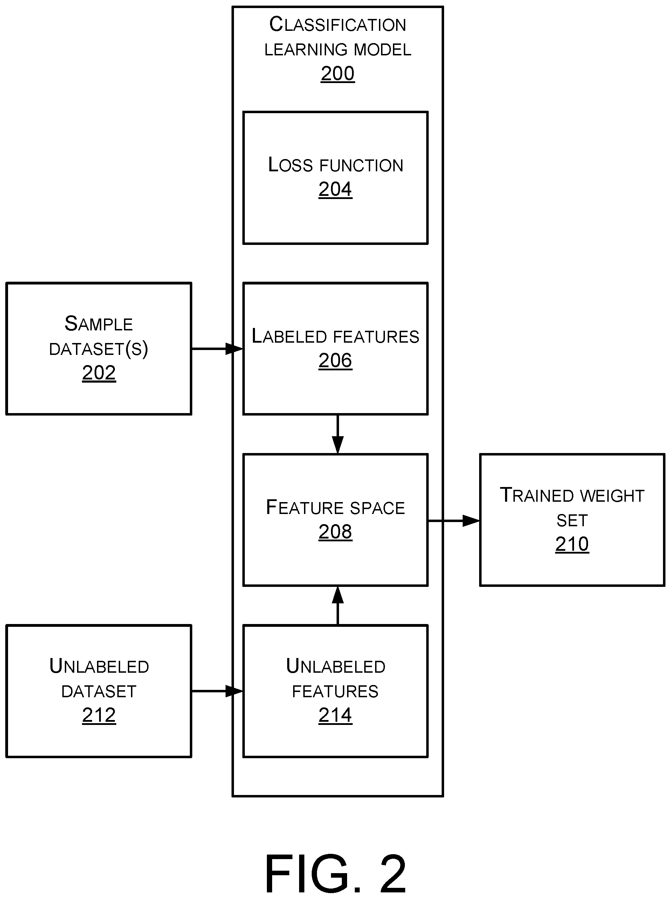

FIG. 2 illustrates a diagram of a classification learning model 200 according to example embodiments of the present disclosure. The classification learning model 200 may be trained by inputting one or more sample datasets 202 into the classification learning model 200. The training of the classification learning model 200 may further be performed on a loss function 204, wherein the classification learning model 200 extracts labeled features 206 from the sample datasets 202 and embeds the labeled features 206 on a feature space 208 to optimize the loss function 204. Based thereon, the classification learning model 200 may generate and update weight sets on the feature space 208 after each epoch of training. After any number of epochs of training in this manner, a trained weight set 210 may be output. The classification learning model 200 may subsequently compute tasks such as classification upon any number of unlabeled datasets 212, extracting unlabeled features 214 from each unlabeled dataset 212 and embedding the unlabeled features 214 in the feature space 208 to optimize an output of the loss function 204, with reference to the trained weight set 210.

The classification learning model 200 may be hosted on storage of any computing system as described above, including a cloud computing system and a low-powered computing system, as well as any other computing system having one or more physical or virtual processor(s) capable of executing the learning model to compute tasks for particular functions. For the purpose of example embodiments of the present disclosure, such as computing system hosting the classification learning model 200 may be referred to as a "learning system." The learning system may load the feature space 208 and the trained weight set 210 into memory and execute the central network of the classification learning model 200 to compute outputs for a classification task to be performed upon unlabeled datasets 212 received from edge nodes 106.

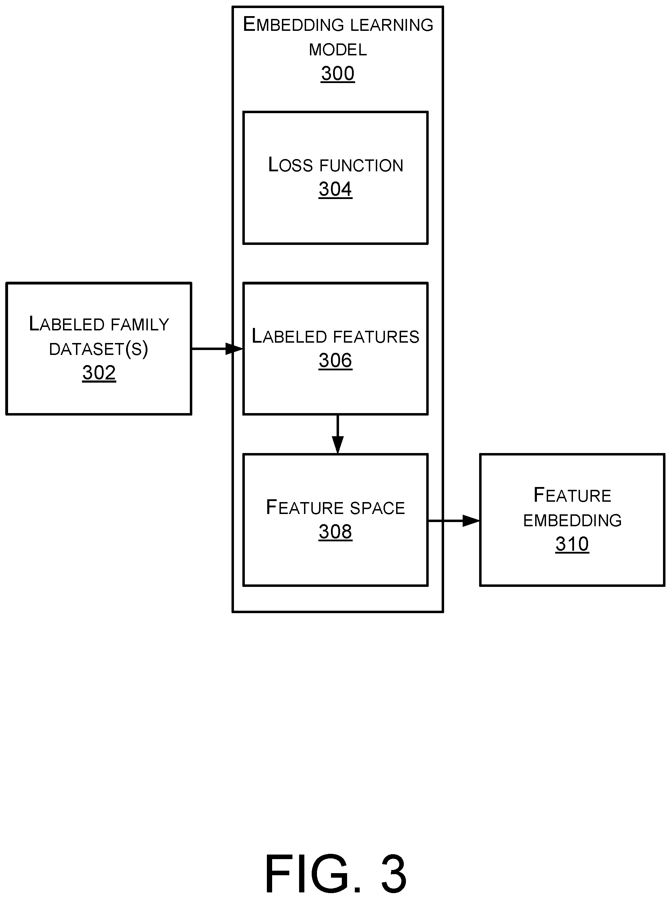

FIG. 3 illustrates a diagram of an embedding learning model 300 according to example embodiments of the present disclosure. The embedding learning model 300 may be trained by inputting one or more labeled family datasets 302 into the embedding learning model 300. The training of the embedding learning model 300 may further be performed on a loss function 304, wherein the embedding learning model 300 extracts labeled features 306 from the labeled family datasets 302 and embeds the labeled features 306 on a feature space 308 to optimize the loss function 304. Based thereon, the embedding learning model 300 may generate and updated weight sets on the feature space 308 after each epoch of training. After any number of epochs of training in this manner, one or more feature embeddings 310 may be output.

The feature embedding 310 may subsequently be referenced in conjunction with a feature space 208 as described above with reference to FIG. 2 so that a classification learning model 300 may compute tasks such as classification by embedding unlabeled features in the feature space 208 based on the feature embedding 310.

To further elaborate upon the above-mentioned embedding learning model 300 and how functionalities of the classification learning model 200 may be improved by operation of the embedding learning model 300, subsequently steps of methods performed by these learning models will be described in more detail, with steps performed by the embedding learning model 300 described first for ease of understanding.

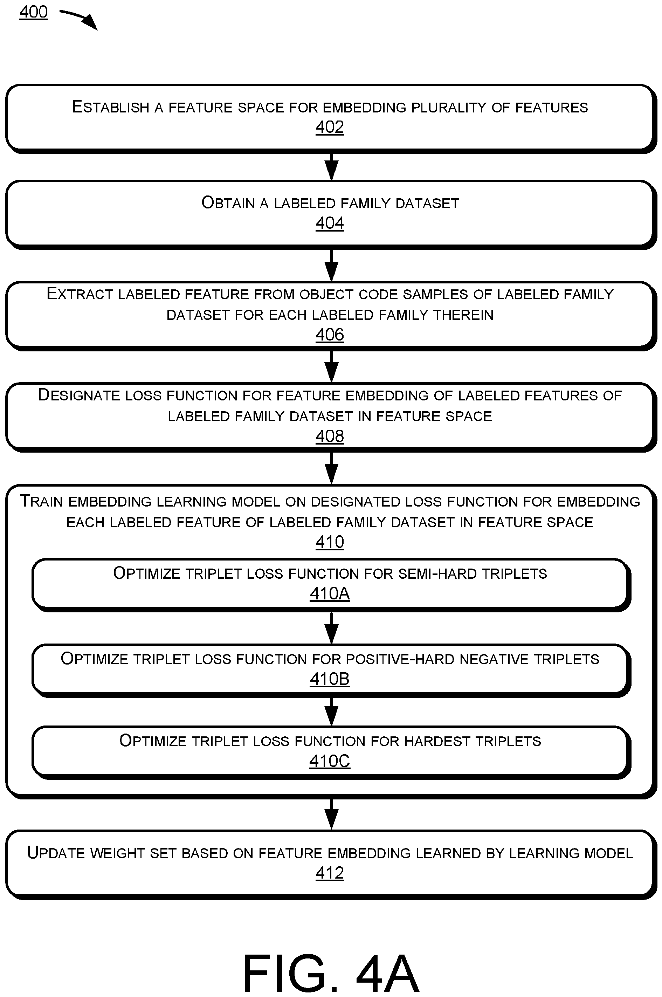

FIG. 4A illustrates a flowchart of an embedding training method 400 according to example embodiments of the present disclosure.

In step 402 of the embedding training method 400, a feature space for embedding a plurality of features is established.

Feature embedding generally refers to translating features of a dataset into a dimensional space of reduced dimensionality so as to increase, or maximize, distances between data points (such as discriminating features of malware samples) which need to be distinguished in computing a task for a particular function, and decrease, or minimize, distances between data points which need to be matched, clustered, or otherwise found similar in computing a task for a particular function. For example, functions for expressing distance between two data points may be any function which expresses Euclidean distance, such as $L_2$-norm; Manhattan distance; any function which expresses cosine distance, such as the negative of cosine similarity; any function which expresses information distance, such as Hamming distance; or any other suitable distance function as known to persons skilled in the art. According to example embodiments of the present disclosure, a distance function evaluating two data points x and $y$ may be written as $D(x, y)$.

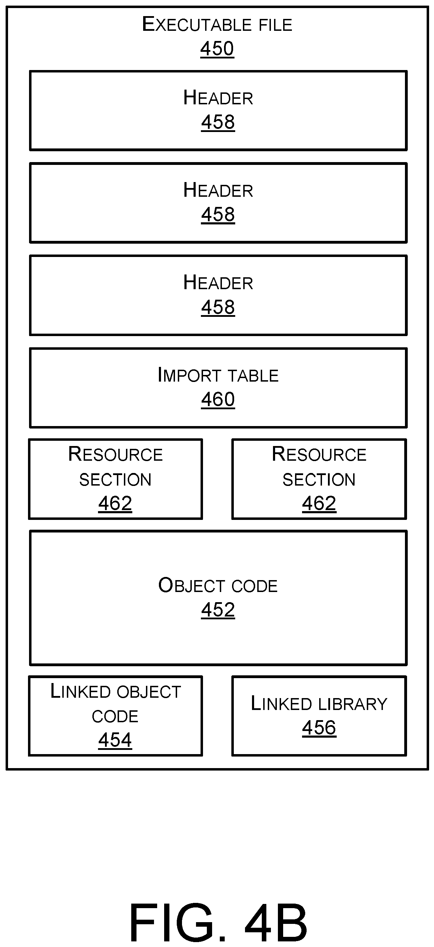

According to example embodiments of the present disclosure, datasets may be composed of instances of executable files. FIG. 4B illustrates a layout of an executable file 450 according to example embodiments of the present disclosure. An executable file 450 may include, for example, object code 452 compiled to the Portable Executable ("PE") format executable on computing systems running, for example, Windows operating systems from Microsoft Corporation of Redmond, Washington; object code compiled to the Mach object ("Mach-O") format executable on computing systems running, for example, MacOS or iOS operating systems from Apple Inc. of Cupertino, California; object code compiled to the Executable and Linkable Format ("ELF") executable on computing systems running, for example, open-source Linux operating systems or Android operating systems; and the like.

The object code 452 may be further statically or dynamically linked to additional object code 454 and/or libraries 456, which may contain functions, routines, objects, variables, and other source code which may be called in source code, the calls being resolved by a compiler during compilation of the source code to create linked object code which may be executed by a computer as part of the executable file 450.

Additionally, an executable file 450 may include some number of headers 458 which occupy sequences of bytes preceding compiled object code 452 and/or linked object code 454 and/or linked libraries 456; following compiled object code 452 and/or linked object code 454 and/or linked libraries 456; and/or interleaved between compiled object code 452 and/or linked object code 454 and/or linked libraries 456. Executable file formats may define different types of headers 458, as well as sub-headers thereof, containing various sequences of data which may be referenced by object code 452, may be referenced during execution of the executable file 450 at runtime, and so on.

For example, executable file formats may define one or more executable file format-defining headers. Generally, different formats of executable files may define different headers whose inclusion in an executable file define that file as belonging to that respective format. For example, executable files of the PE format may define a Disk Operating System ("DOS") executable header, a PE header, as well as an optional header (it should be understood that optional headers are called "optional" by naming conventions, and are not necessarily optional for the purpose of understanding example embodiments of the present disclosure). Executable files of the Mach-O format may define a Mach-O header. ELF executable files may define an ELF header.

Additionally, executable file formats may define one or more import tables 460. An import table 460 may resolve references in the object code which link one or more libraries providing functions, routines, objects, variables, and other source code which may be linked to the executable file during compilation or at runtime.

Additionally, executable file formats may include resource sections 462. For example, executable files of the PE Format may include file icon images, image files in general, dialog boxes, and the like. These resources may be stored in one or more discrete sections of the executable file 450.

Formatting of particular types of headers and contents of particular types of headers need not be further detailed for understanding of the present disclosure.

Datasets include malware family datasets and, optionally, benign family datasets. A malware family dataset includes samples of executable files each labeled as belonging to a particular family of known malware. A "family" of malware may have various meanings in the art, but for the purpose of example embodiments of the present disclosure, a "family" of malware should be understood as encompassing samples of executable files which are executable by computing systems to perform particular malicious operations to infect, damage, hijack, destabilize, or otherwise harm normal functioning of the computing system by a similar pathway.

In step 404 of the embedding training method 400, a labeled family dataset is obtained.

According to example embodiments of the present disclosure, there should be minimal heterogeneity among samples of a same malware family in the malicious operations they are executable to perform. Some definitions of a "family" of malware may encompass broader groupings of samples which accomplish similar malicious objectives by heterogeneous operations or pathways; example embodiments of the present disclosure generally do not pertain to such broader definitions of "family."

Features of executable file samples may be statically or dynamically detectable features. Statically detectable features may be features of the executable files which are present outside of runtime, such as a string of text present in the executable files, a checksum of part of all of the source code such as an MD5 hash, and such features as known to exist in executable files outside of runtime. Dynamically detectable features may be operations performed by a computing system executing the executable file during runtime, such as read or write accesses to particular memory addresses, read or write accesses of memory blocks of particular sizes, read or write accesses to particular files on non-volatile storage, and the like.

An embedding learning model according to example embodiments of the present disclosure may is trained to generate a feature embedding for a labeled dataset representing multiple malware families. The labeled dataset includes samples of executable files, each sample being labeled as having one of multiple distinct features; each of these distinct features may be a discriminating feature which distinguishes executable files belonging to one malware family from executable files belonging to all other malware families. Thus, executable file samples of each malware family are distinguished from executable file samples of each other malware family by these labeled features.

A feature embedding may be an embedding of each sample of the labeled dataset into a feature space as described above. Furthermore, according to example embodiments of the present disclosure, it is desirable that a feature embedding causes each labeled feature among the labeled dataset to be distinguished from each other labeled feature among the labeled dataset as much as possible. Thus, it is desirable that for each particular labeled feature, samples having that particular labeled feature be embedded having as little distance from each other as possible, and, conversely, having as much distance from samples having other labeled features as possible.

According to other example embodiments of the present disclosure, a labeled benign software dataset may optionally be obtained. However, a labeled benign software dataset may merely be labeled as benign for distinction from labeled malware samples in general; for the purpose of example embodiments of the present disclosure, with regard to sample executable files labeled as benign, no particular features thereof need be labeled, as there are not necessarily commonalities among samples of benign software which may be distinguished from features of malware.

Moreover, though a labeled benign software dataset may be used for purposes of example embodiments of the present disclosure, it need not be used alongside the labeled family dataset. For purposes of example embodiments of the present disclosure, it is further desirable to distinguish novel malware families having discriminating features which have yet to be identified from other malware families as well as from benign software. Novel malware families often emerge as a result of evasive features being added to executable files, where evasive features may be derived from benign software to thwart known efforts to distinguish malware from benign software. For example, Fleshman et al. demonstrated design of novel malware to evade classification as malware by known machine learning models, by introducing features to the novel malware such as text strings copied from benign software (e.g., text of common end-user licensing agreements). Given machine learning models which are trained to classify between malware and benign software, such evasive measures may cause the learning models to identify similarities between the evasive malware and benign software, rather than differences.

Thus, example embodiments of the present disclosure may utilize labeled family datasets, while omitting labeled benign software datasets.

In step 406 of the embedding training method 400, a labeled feature is extracted from executable file samples of the labeled family dataset for each labeled family therein.

Generally, sample executable files in the nature of computer-executable applications written to exploit the substantial computational resources of modern computing systems may be significant in size. Thus, in the interest of avoiding substantial computational overhead, it is not desirable to extract extensive features from the entirety of executable file samples, and nor is it desirable to extract features of substantial size from executable file samples.

According to example embodiments of the present disclosure, a feature extracted from sample executable files may be a sequence of bytes extracted from a header of the sample executable file or a sub-header of the sample executable file. A header or sub-header of the sample executable file may be, for example, an executable file format-defining header, such as a DOS executable header, a PE header, or an optional header.

According to example embodiments of the present disclosure, a feature extracted from sample executable files may be a sequence of bytes extracted from executable sections of object code. A feature may include, for example, a first 16 kilobytes or a first 32 kilobytes of an executable section of the object code, or 16 consecutive or non-consecutive kilobytes or 32 consecutive or non-consecutive kilobytes from anywhere in an executable section of the object code. A feature may be extracted from a first executable section of object code, or from a last executable section thereof, or from any n-th executable section thereof, or from each executable section thereof. A feature may be extracted following an entry point of an executable section of the object code (i.e., a position in a section of the object code where execution by a computing system begins).

According to example embodiments of the present disclosure, a feature extracted from sample executable files may be a sequence of bytes extracted from resource sections of executable files. A feature may include, for example, some number of bytes of any resource of a resource section of the executable file. A feature may be extracted from a first resource of a resource section, or from a last resource of the resource section, or from any n-th resource of the resource section, or from each resource of the resource section. For example, a feature may include some number of bytes of a last icon resource of a resource section.

According to example embodiments of the present disclosure, a feature extracted from sample executable files may be a sequence of bytes extracted from an import table. A feature may include a character string such as, for example, a name of a library linked in an import table, a name of a function referenced in an import table, and the like. A feature may include a character string which includes a substring matching one or more patterns. For example, the character string may be a function name including the substring "network" or a function name including the substring "registry." The character string may be a function name including any substring arbitrarily defined based on characteristics which may occur in a malware family.

According to example embodiments of the present disclosure, a feature extracted from sample executable files may be one or more sequences of bytes including any combination of the above examples.

According to example embodiments of the present disclosure, one or more sequences of bytes as described above may be sampled from one or more sources as described above by pseudo-random sampling, rather than from one or more deterministic sequences of bytes. For example, a sequence of 64 kilobytes may be sampled from each byte throughout a source, such as a first executable section of object code, by pseudo-randomly sampling with a sampling probability of 0.1 for each byte. Additionally, according to example embodiments of the present disclosure, bytes may be sampled over ranges including or excluding bytes having very low information entropy or bytes having very high information entropy. For example, for each block of bytes where information entropy within that block is greater than the 88th percentile of maximum possible information entropy, all bytes within 128 bytes of that block may be excluded from sampling. Generally, pseudo-random sampling methodology and seeds should be consistent for extracting features across each sample of a labeled family dataset.

A feature may be represented as a feature vector encompassing some number of bits therein. For example, supposing that the executable file occupies 64-bit memory addresses, each 64 bits of the executable file may be represented as a trainable embedding vector {0, 1, 2, . . ., 63}.

Features extracted in this manner are expected to be generally homogeneous among samples of a same labeled feature and heterogeneous between samples of different labeled features; are unlikely to be generic across multiple families of malware or between malware and benign software; and are unlikely to be arbitrary bytes which exhibit no homogeneity among different samples, such as compressed data. Features extracted in this manner need not be reflective of operations or pathways of a malware family and need not be relevant to discriminating malware from benign software; for the purpose of an embedding learning model according to example embodiments of the present disclosure, features need merely to distinguish sample executable files of one malware family from sample executable files of each other malware family. Thus, features extracted from sample executable files may include bytes which do not reflect operations performed by the sample executable files, and furthermore may exclude subsequent sections of the executable files which do reflect operations performed by the sample executable files.

According to other example embodiments of the present disclosure, a feature extracted from sample executable files may be a sequence of bytes extracted elsewhere from the executable files.

In step 408 of the embedding training method 400, a loss function is designated for feature embedding of labeled features of the labeled family dataset in the feature space.

A loss function, or more generally an objective function, is generally any mathematical function having an output which may be optimized during the training of a learning model.

Training of the learning model may, at least in part, be performed to train the learning model on at least the designated loss function to learn a feature embedding of labeled features of the labeled family dataset in the feature space. The loss function may be any function having a first distance and a second distance as parameters which may be simultaneously optimized for a minimal value of a first distance and a maximal value of a second distance. For example, the loss function may be a triplet loss function, which, generally, is a function which takes, as parameters, an anchor data point $a$, an anchor-positive data point $p$ which matches the anchor data point with regard to a feature thereof, and an anchor-negative data point $n$ which does not match the anchor data point with regard to the feature. The triplet loss function may calculate a first distance between the anchor data point $a$ and the anchor-positive data point $p$ (henceforth denoted as $D(a,$

$p$)), calculate a second distance between the anchor data point $a$ and the anchor-negative data point $n$ (henceforth denoted as $D(a, n)$) and calculate a difference between the first distance and the second distance; the difference between the first distance and the second distance may penalize the learning model. Therefore, training the learning model on the triplet loss function may generate a learned feature embedding which optimizes for minimizing the difference between the first distance and the second distance.

The triplet loss function may be further modified to be a hinge loss function. A hinge loss function, generally, is a loss function which negates outputs below a certain margin but continues to penalize outputs above a certain margin. Thus, modifying the triplet loss function to be a hinge loss function may entail adding the difference between the first distance and the second distance to a margin parameter. Consequently, in the event that the difference between the first distance and the second distance is negative (that is, the anchor-positive data point $p$ is closer to the anchor data point $a$ than the anchor-negative data point $n$ is to the anchor data point $a$), the output of the hinge loss function may be negated; in the event that it is positive, the output of the hinge loss function may be magnified. Therefore, training the learning model on the hinge loss function may generate a learned feature embedding which simultaneously optimizes for anchor-positive data points being nearer to the anchor data point and anchor-negative data points being further from the anchor data point.

The hinge loss function may further be a max of hinges loss function. The max of hinges loss function may determine, for each anchor-positive data point $p_i$, a respective distance between the anchor data point $a$ and the respective anchor-positive data point $p_i$, and determine, for each anchor-negative data point $n_i$, a respective distance between the anchor data point $a$ and the respective anchor-negative data point $n_i$; determine each difference between a distance between the anchor data point $a$ and the respective anchor-positive data point $p_i$ and a distance between the anchor data point $a$ and the respective anchor-negative data point $n_i$; add each difference to a margin parameter to obtain a hinge loss; and output the maximum hinge loss among each of these hinge losses. This output may represent the loss resulting from the hard positive data point furthest from the anchor data point (where "hard positive" refers to anchor-positive data points furthest away from the anchor data point and therefore the most difficult to match with the anchor data point in general) and the hard negative data point nearest the anchor data point (where "hard negative" refers to anchor-negative data points nearest to the anchor data point and therefore the most difficult to distinguish from the anchor data point in general). Therefore, training the learning model on the max of hinges loss function may generate a learned feature embedding which simultaneously optimizes for hardest-positive data points being nearer to the anchor data point and hardest-negative data points being further from the anchor data point.

A loss function as described above may be written as follows:

$$ L = max\{0, D(a,p) - D(a,n) + \alpha\} $$

$D(x, y)$ denotes a distance function between data points $x$ and y measured in any suitable metric as described above, and $\alpha$ denotes a margin parameter as described above. The margin parameter may have a value set manually based on prior experimentation; the value of the margin parameter may determine extent to which anchor-positive data points and anchor-negative data points are spaced apart distance-wise in a resulting feature embedding. Thus, the margin parameter may be set to a smaller value to cause anchor-positive data points and nearer anchor-negative data points to be spaced apart in the feature embedding, and the margin parameter may be set to a larger value to cause anchor-positive data points and both nearer and further anchor-negative data points to be spaced apart in the feature embedding, depending on which of these outcomes is closer to a desired outcome.

A positive L value resulting from an iteration of training will penalize the feature embedding, influencing subsequent iterations of training to embed labeled features in such a way that the L value is reduced. Given this loss function, an optimal $L$ value of 0 will only result in the event that $D(a, p) < \alpha - D(a, n)$. Thus, subsequent iterations of training may be induced to embed anchor-negative data points at a distance of at least $\alpha$ away from anchor-positive data points; optimally, anchor-positive data points for a same labeled feature should be embedded at a same point, and all anchor-negative data points for the same labeled feature should be embedded at least $\alpha$ away from that same point.

In step 410 of the embedding training method 400, the embedding learning model is trained on the designated loss function for embedding each labeled feature of the labeled family dataset in the feature space.

For the purpose of such training, samples of the labeled family dataset may be divided into multiple batches, where samples of each batch may be randomly selected from the labeled family dataset, without replacement. Each batch may be equal in size. Thus, each batch is expected, statistically, to contain approximately similar numbers of samples of each labeled feature on average.

According to example embodiments of the present disclosure, batch sizes may be set so as to increase probability that each batch includes at least one positive data point for each labeled feature and at least one negative data point for each labeled feature. Thus, batch sizes should not be so small that these requirements are not met.

Based on a loss function as described above, training on each batch of the labeled family dataset for each anchor point $a$ may be performed pairwise over each pair of anchor-positive and anchor-negative data points relative to the anchor point *a*. Each pair of data points may be input into the loss function, with one data point being an anchor-positive data point *p* and the other data point being an anchor-negative data point *n* for a labeled feature of the same anchor data point *a*. Thus, as time complexity of this training increases in quadratic time with batch size, batch sizes should not be so large that computational costs become prohibitive.

According to example embodiments of the present disclosure, training the embedding learning model on the designated loss function may include three phases 410A, 410B, and 410C, wherein, in each phase, the embedding learning model is trained on a different subset of pairwise data points of the batch for each anchor data point of the batch. Each phase may be terminated after the model has exhibited loss improvement over some number of epochs. Thus, termination conditions for each phase may be determined based on whether, over the most recent *k* outputs of the loss function, the p-value of the probability that loss function values are stable or increasing is less than P (i.e., there is a high probability that loss function values are decreasing, thus improving).

In a first training phase 410A according to example embodiments of the present disclosure, optimization of the triplet loss function is performed for semi-hard triplets to output a first phase feature embedding. This means that the embedding learning model is trained on, for each anchor data point *a* in the batch, each anchor-positive data point *p* and anchor-negative data point *n* pair wherein $D(a, p) < D(a, n) < \alpha$ (thus excluding hardest-positive data points which may be further away from the anchor data point than negative data points; excluding hardest-negative data points which may be nearer the anchor data point than positive data points; and maintaining focus of the training on data points within a distance delineated by the margin parameter.

In the first training phase, limiting training data to semi-hard triplets may facilitate the training producing correct feature embeddings wherein anchor-positive data points are nearer the anchor data point than anchor-negative data points.

Furthermore, in the first training phase, including pairwise anchor-positive and anchor-negative data points among the triplets may improve outcomes over including only one anchor-positive data point among the triplets. Optimizing the triplet loss function may become stalled upon the loss function reaching various local minima, which may result from, for example, all positive data points and all negative data points being embedded at a same point (such as the same anchor data point). Optimizing the triplet loss function may also result in other unintended consequences, such as a positive data point being embedded further apart from the negative data points while the negative data points are not embedded further apart from an anchor data point, or both a positive data point and a negative data point being embedded further apart from each other without regard as to proximity to an anchor data point, or generally any outcome wherein positive data points are not embedded nearer an anchor data point or each other and/or negative data points are not embedded further from an anchor data point. Including pairwise anchor-positive and anchor-negative data points among the triplets may reduce the likelihood of each of these outcomes.

Over epochs of the first training phase 410A, it is expected that the loss function will be optimized very promptly, possibly after only one epoch, due to the optimization problem not being very difficult as a result of excluding hardest-positive and hardest-negative data points. Thus, termination conditions of the first training phase 408A may be set with *k* relatively low, such as *k* = 3, and P relatively high, such as P = 0.05 (i.e., the first training phase 410A may be terminated as soon as the loss function output appears to exhibit improvement over just a few epochs).

In a second training phase 410B according to example embodiments of the present disclosure, optimization of the triplet loss function is performed for positive-hard negative triplets, initializing from the first phase feature embedding, to output a second phase feature embedding. This means that the embedding learning model is trained on, for each anchor point *a* in the batch, the subset of training phase 410A plus all anchor-negative data points *n* which are nearer the anchor data point *a* than respective paired anchor-positive data points *p* (thus including hardest-negative data points which may be nearer the anchor data point than positive data points).

Over epochs of the second training phase 410B, it is expected that the loss function will be optimized after relatively few epochs, due to optimization being facilitated as a result of initializing from the first phase feature embedding. Thus, termination conditions of the second training phase 410B may be set with *k* relatively low, such as *k* = 3, and P relatively high, such as *P* = 0.01 (i.e., the second training phase 408B may be terminated as soon as the loss function output appears to exhibit improvement over just a few epochs).

In a third training phase 410C according to example embodiments of the present disclosure, optimization of the triplet loss function is performed for hardest triplets, initializing from the second phase feature embedding, to output a third phase feature embedding. This means that the embedding learning model is trained on, for each anchor data point *a* in the batch, pairings of hardest-positive data points (anchor-positive data points *p* furthest from the anchor data point) and hardest-negative data points (anchor-negative data points *n* nearest the anchor data point).

According to example embodiments of the present disclosure, batch size may be increased during the third training phase 410C. For example, doubling batch size during optimizing for hardest triplets may improve optimization of the triplet loss function, by providing more heterogeneity in extreme proximity and distance from positive and negative data points to anchor data points. To the extent that batch size may be increased during this step, the batch size should not be increased to the extent that computational costs become prohibitive (as described above).

Over epochs of the third training phase 410C, it is expected that the loss function will only gradually be optimized after relatively many epochs, due to the optimization problem being made much more difficult by including only pairings of hardest-positives and hardest-negatives. Noise occurring in the loss function is also expected to obfuscate loss function trends to some extent. Thus, termination conditions of the third training phase 410C may be set with $k$ relatively high, such as $k = 10$, and P relatively low, such as P = 0.001 (i.e., the third training phase 410C may only be terminated after loss function output exhibits consistent improvement over a number of epochs, to ensure that improvements observed are not noise).

In step 412 of the embedding training method 400, a weight set is updated based on a feature embedding learned by the learning model.

A weight set may include various parameters which determine the operation of the embedding learning model in embedding each labeled feature of the labeled family dataset in the feature space. The training as performed in the above-mentioned training phases may be reflected in updates to the weight set. The weight set may be updated according to gradient descent ("GD") (that is, updated after computation completes for an epoch), stochastic gradient descent ("SGD"), mini-batch stochastic gradient descent ("MB-SGD") (that is, updated after computation of each batch), backpropagation ("BP"), or any suitable other manner of updating weight sets as known to persons skilled in the art. For example, according to example embodiments of the present disclosure, the weight set may be updated according to SGD.

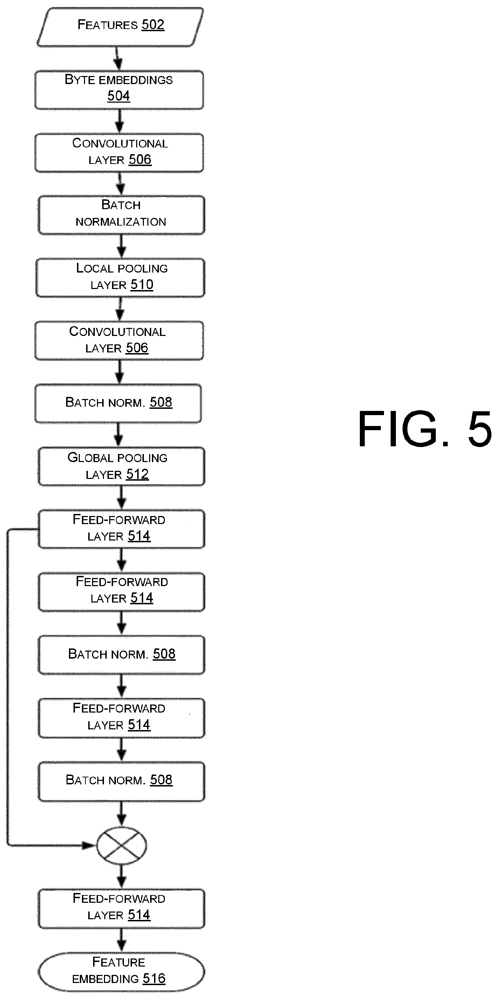

FIG. 5 illustrates an architectural diagram of an embedding learning model 500 according to example embodiments of the present disclosure.

The embedding learning model 500 may extract features 502 from samples of a labeled family dataset, as described above with reference to FIG. 4A.

The features 502 may be represented as byte embeddings 504 as described above.

The byte embeddings 504 may be input into a first layer of multiple convolutional layers 506 of the embedding learning model 500. Each subsequent convolutional layers 506 after the first may take output of a previous convolutional layer 506 as input.

Input at any convolutional layer 506 (including outputs of previous convolutional layers 506) may be batch-normalized at each batch normalization 508 as known to persons skilled in the art.

Outputs from each convolutional layer 506 may be input into a pooling layer, which may be, for example, a local pooling layer 510 or a global pooling layer 512 as known to persons skilled in the art. Local pooling layers 510 and global pooling layers 512 may each cause features to be down-sampled so as to retain features which are present, without retaining features which are absent. A global pooling layer 512 may receive output from a final convolutional layer 506 of the embedding learning model 500, and may down-sample features with regard to each channel of the output feature embeddings; thus, each individual channel of the output feature embeddings of the global pooling layer 512 may retain a feature which is present therein, without retaining features which are absent therein.

Output from the global pooling layer 512 may be input into a first layer of multiple feed-forward layers 514. Output from each feed-forward layer 514 may be input into a next feed-forward layer 514 without cycling back, as known to persons skilled in the art. Moreover, output from a feed-forward layer 514 may be input as residuals into subsequent feed-forward layers 514 after a next feed-forward layer 514. According to example embodiments of the present disclosure, the structure of the multiple feed-forward layers 514 may be implemented by a residual neural network ("ResNet") as known to persons skilled in the art.

Inputs at any feed-forward layer 514 may be batch-normalized at each batch normalization 508 as known to persons skilled in the art.

A final feed-forward layer 514 outputs a feature embedding 516 as described above.

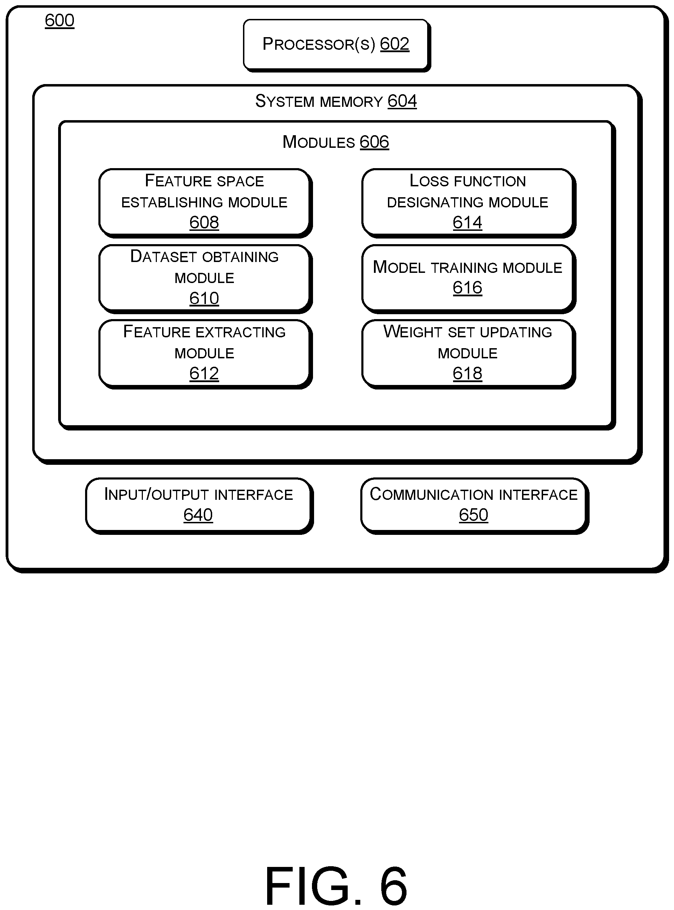

FIG. 6 illustrates an example system 600 for implementing the processes and methods described above for implementing embedding learning models.

The techniques and mechanisms described herein may be implemented by multiple instances of the system 600, as well as by any other computing device, system, and/or environment. The system 600 may be a distributed system composed of multiple physically networked computers or web servers, a physical or virtual cluster, a computing cloud, or other networked computing architectures providing physical or virtual computing resources as known by persons skilled in the art. Examples thereof include learning systems such as the cloud computing system and the low-powered system as described above with reference to FIG. 1. The system 600 shown in FIG. 6 is only one example of a system and is not intended to suggest any limitation as to the scope of use or functionality of any computing device utilized to perform the processes and/or procedures described above. Other well-known computing devices, systems, environments and/or configurations that may be suitable for use with the embodiments include, but are not limited to, personal computers, server computers, hand-held or laptop devices, multiprocessor systems, microprocessor-based systems, set top boxes, game consoles, programmable consumer electronics, network PCs, minicomputers, mainframe computers, distributed computing environments that include any of the above systems or devices, implementations using field programmable gate arrays ("FPGAs") and application specific integrated circuits ("ASICs"), and/or the like.

The system 600 may include one or more processors 602 and system memory 604 communicatively coupled to the processor(s) 602. The processor(s) 602 and system memory 604 may be physical or may be virtualized and/or distributed. The processor(s) 602 may execute one or more modules and/or processes to cause the processor(s) 602 to perform a variety of functions. In embodiments, the processor(s) 602 may include one or more general-purpose processor(s) and one or more special-purpose processor(s). The general-purpose processor(s) and special-purpose processor(s) may be physical or may be virtualized and/or distributed. The general-purpose processor(s) and special-purpose processor(s) may execute one or more instructions stored on a computer-readable storage medium as described below to cause the general-purpose processor(s) or special-purpose processor(s) to perform a variety of functions. General-purpose processor(s) may be computing devices operative to execute computer-executable instructions, such as Central Processing Units ("CPUs"). Special-purpose processor(s) may be computing devices having hardware or software elements facilitating computation of neural network computing tasks such as training and inference computations. For example, special-purpose processor(s) may be accelerator(s), such as Neural Network Processing Units ("NPUs"), Graphics Processing Units ("GPUs"), Tensor Processing Units ("TPU"), implementations using field programmable gate arrays ("FPGAs") and application specific integrated circuits ("ASICs"), and/or the like. To facilitate computation of tasks such as matrix multiplication, special-purpose processor(s) may, for example, implement engines operative to compute mathematical operations such as matrix operations and vector operations. Additionally, each of the processor(s) 602 may possess its own local memory, which also may store program modules, program data, and/or one or more operating systems.

Depending on the exact configuration and type of the system 600, the system memory 604 may be volatile, such as RAM, non-volatile, such as ROM, flash memory, miniature hard drive, memory card, and the like, or some combination thereof. The system memory 604 may include one or more computer-executable modules 606 that are executable by the processor(s) 602. The modules 606 may be hosted on a network as services for a data processing platform, which may be implemented on a separate system from the system 600.

The modules 606 may include, but are not limited to, a feature space establishing module 608, a dataset obtaining module 610, a feature extracting module 612, a loss function designating module 614, a model training module 616, and a weight set updating module 618.

The feature space establishing module 608 may be configured to establish a feature space for embedding a plurality of features as described above with reference to FIG. 4A.

The dataset obtaining module 610 may be configured to obtain a labeled family dataset as described above with reference to FIG. 4A.

The feature extracting module 612 may be configured to extract features from the labeled family dataset as described above with reference to FIG. 4A.

The loss function designating module 614 may be configured to designate a loss function for feature embedding of labeled features of the labeled family dataset in the feature space as described above with reference to FIG. 4A.

The model training module 616 may be configured to train the embedding learning model on the designated loss function for embedding each labeled feature of the labeled family dataset in the feature space as described above with reference to FIG. 4A.

The weight set updating module 618 may be configured to update a weight set based on a feature embedding learned by the learning model as described above with reference to FIG. 4A.

The system 600 may additionally include an input/output (I/O) interface 640 and a communication module 650 allowing the system 600 to communicate with other systems and devices over a network, such as the data processing platform, a computing device of a data owner, and a computing device of a data collector. The network may include the Internet, wired media such as a wired network or direct-wired connections, and wireless media such as acoustic, radio frequency (RF), infrared, and other wireless media.

Some or all operations of the methods described above can be performed by execution of computer-readable instructions stored on a computer-readable storage medium, as defined below. The term "computer-readable instructions" as used in the description and claims, include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

The computer-readable storage media may include volatile memory (such as random-access memory ("RAM")) and/or non-volatile memory (such as read-only memory ("ROM"), flash memory, etc.). The computer-readable storage media may also include additional removable storage and/or non-removable storage including, but not limited to, flash memory, magnetic storage, optical storage, and/or tape storage that may provide non-volatile storage of computer-readable instructions, data structures, program modules, and the like.

A non-transitory computer-readable storage medium is an example of computer-readable media. Computer-readable media includes at least two types of computer-readable media, namely computer-readable storage media and communications media. Computer-readable storage media includes volatile and non-volatile, removable and non-removable media implemented in any process or technology for storage of information such as computer-readable instructions, data structures, program modules, or other data. Computer-readable storage media includes, but is not limited to, phase change memory ("PRAM"), static random-access memory ("SRAM"), dynamic random-access memory ("DRAM"), other types of random-access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transmission mechanism. As defined herein, computer-readable storage media do not include communication media.

The computer-readable instructions stored on one or more non-transitory computer-readable storage media that, when executed by one or more processors, may perform operations described above with reference to FIGS. 1-5. Generally, computer-readable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

According to example embodiments of the present disclosure, in order to prepare classification learning models ahead of time for recognizing novel malware families which may possess discriminating features which are also novel, and thus not known ahead of time, based on feature embeddings output by embedding learning models as described above, learned feature embeddings and the associated weight sets trained in the process may be utilized as a basis for initializing subsequent training of classification learning models. In particular, such subsequent training may be performed on unlabeled samples of novel malware to which the labeled malware family datasets were not exposed, which may include discriminating features which were not present in the labeled malware family datasets.

Conventional approaches of training a classification learning model using labeled malware family datasets may be expected to exhibit overfitting to the labeled datasets while lacking adaptability to novel datasets containing novel features which do not exist in the labeled datasets. Given the nature of malware, wherein evasive features are routinely introduced to avoid detection by known discriminatory features, classification learning models which learn relying upon only labeled known features may be thwarted by such evasive features. Boosting classification learning models by learned feature embeddings, wherein each feature is maximally discriminated relative to each other feature, is expected to produce more robust learning which may preemptively discriminate against novel features, including evasive features.

Below, comparisons are made between performance of conventional classification learning models and classification learning models boosted by trained embedding learning models according to example embodiments of the present disclosure.

The open-source EMBER dataset, published by Anderson and Roth, was used to compare three approaches: (1) training an embedding learning model on the EMBER dataset and then using the output feature embedding directly for classification; (2) training a classification learning model on the EMBER dataset and then using the trained classification learning model directly for classification; and (3) training an embedding learning model on the EMBER dataset, then training a classification learning model initialized with the learned feature embedding on the EMBER dataset. A gradient boosted tree was selected as the classification learning model. Furthermore, a second dataset was prepared as input for the classification learning model, excluding labeled malware family datasets used to train the embedding learning model, leaving only benign datasets, further augmented with several thousand samples of novel malware families.

Table 1 below summarizes comparative outcomes between each of the above approaches (where scores closer to 1 correlate with better performance in each case, and brackets denote 95% confidence interval surrounding the scores).

| Datasets | Training embedding model only | Training classification model only | Training embedding model, then classification model |
|---|---|---|---|
| Labeled malware family dataset and benign dataset | 0.8787 [0.8757, 0.8816] | 0.9298 [0.9276, 0.321] | 0.9752 [0.9739, 0.9764] |
| Novel malware family dataset and benign dataset | 0.8893 [0.8855, 0.8933] | 0.9909 [0.9902, 0.9916] | 0.9926 [0.9918, 0.9933] |

In each case, a classification learning model augmented by a learned feature embedding from an embedding learning model according to example embodiments of the present disclosure resulted in the best performance against each dataset. In each case, the observed performance improvement was statistically significant, and statistically unlikely to reflect noise or random variation.

By the abovementioned technical solutions, the present disclosure provides feature embedding by machine learning, training a machine learning model to embed feature vectors in a feature space which magnifies distances between discriminating features of different malware families. In a labeled family dataset, labeled features which discriminate between different families are embedded in a feature space on a triplet loss function which, pairwise, optimizes for minimizing distances of anchor-positive data points from anchor data points, while maximizing distances of anchor-negative data points from those same anchor data points. Training may be performed in phases, starting by excluding hardest-positive and hardest-negative data points to provide reliable feature embeddings for initializing subsequent, more difficult phases. By training an embedding learning model to distinguish labeled malware families apart from training a classification learning model, the trained feature embedding may boost performance of classification learning models with regard to novel malware families which can only be distinguished by novel features. Consequently, these techniques enable enhanced performance of classification of novel malware families, which may further be provided as a service on a cloud computing system.

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A computer-readable storage medium storing computer-readable instructions executable by one or more processors (602), that when executed by the one or more processors, cause the one or more processors to perform a method (400) comprising:

   establishing (402) a feature space (208, 308) for embedding a plurality of features;
   obtaining (404) a labeled malware family dataset (202, 302) which includes samples of executable files, each sample being labeled as belonging to a particular family of known malware, wherein executable file samples of each malware family are distinguished from executable file samples of each other malware family by a respective labeled feature;
   extracting (406) a labeled feature (206, 502) from executable file (450) samples of the labeled malware family dataset (202, 302) for each labeled malware family therein;
   designating (408) a loss function (204, 304) for embedding (516) each labeled feature of the labeled malware family dataset in the feature space (208, 308); and
   training (410) an embedding learning model (200, 300, 400, 500) on the designated loss function.

2. The computer-readable storage medium of claim 1, wherein each sample of executable files of the labeled malware family dataset is labeled as having one of multiple distinct features, wherein each of the distinct feature is a discriminating feature which distinguishes executable files belonging to one malware family from executable files belonging to all other malware families.

3. The computer-readable storage medium of claim 1, wherein for each executable file (450) sample of the executable file samples, the labeled feature comprises a plurality of bytes sampled from at least one of a header (458), an executable section (452), a resource section (462), and an import table (460) of the executable file sample.

4. The computer-readable storage medium of any preceding claim, wherein the loss function is a triplet loss function (204, 304).

5. The computer-readable storage medium of claim 4, wherein training the embedding learning model on the triplet loss function comprises embedding, for an anchor data point of the labeled features, pairs of anchor-positive data points and anchor-negative data points with respect to the anchor data point.

6. The computer-readable storage medium of claim 5, wherein training the embedding learning model further comprises at least a first training phase wherein hardest-positive data points and hardest-negative data points are excluded from embedding with respect to the anchor data point.

7. The computer-readable storage medium of claim 6, wherein training the embedding learning model further comprises a subsequent training phase wherein hardest-positive data points and hardest-negative data points are embedded pairwise with respect to the anchor data point.

8. A system (600) comprising:

one or more processors (602); and
memory (604) communicatively coupled to the one or more processors, the memory storing computer-executable modules executable by the one or more processors that, when executed by the one or more processors, perform associated operations, the computer-executable modules comprising:

a feature space establishing module (608) configured to establish (402) a feature space (208, 308) for embedding a plurality of features;
a dataset obtaining module (610) configured to obtain (404) a labeled malware family dataset (202, 302) which includes samples of executable files, each sample being labeled as belonging to a particular family of known malware, wherein executable file samples of each malware family are distinguished from executable file samples of each other malware family by a respective labeled feature;
a feature extracting module (612) configured to extract (406) a labeled feature (206, 502) from executable file (450) samples of the labeled malware family dataset (202, 302) for each labeled malware family therein;
a loss function designating module (614) configured to designate a loss function (204, 304) for embedding each labeled feature of the labeled malware family dataset in the feature space (208, 308); and
a model training module (616) configured to train (410) an embedding learning model (200, 300, 400, 500) on the designated loss function (204, 304).

9. The system of claim 8, wherein each sample of the samples of executable files is labeled as having one of multiple distinct features, wherein each of the distinct feature is a discriminating feature which distinguishes executable files belonging to one malware family from executable files belonging to all other malware families.

10. The system of claim 8, wherein the feature extracting module is further configured to extract, for each executable file sample of the executable file samples, a labeled feature comprising a plurality of bytes sampled from at least one of a header (458), an executable section (452), a resource section (462), and an import table (460) of the executable file sample.

11. The system of any one of claims 8 to 10, wherein the loss function is a triplet loss function (204, 304).

12. The system of claim 11, wherein the model training module is configured to train the embedding learning model on the triplet loss function by embedding, for an anchor data point of the labeled features, pairs of anchor-positive data points and anchor-negative data points with respect to the anchor data point.

13. The system of claim 12, wherein the model training module is configured to train the embedding learning model by at least a first training phase wherein hardest-positive data points and hardest-negative data points are excluded from embedding with respect to the anchor data point.

14. The system of claim 13, wherein the model training module is configured to train the embedding learning model by a subsequent training phase wherein hardest-positive data points and hardest-negative data points are embedded pairwise with respect to the anchor data point.

**Patentansprüche**

1. Ein computerlesbares Speichermedium, das computerlesbare Anweisungen speichert, die von einem oder mehreren Prozessoren (602) ausgeführt werden können, die, wenn sie von dem einen oder den mehreren Prozessoren ausgeführt werden, den einen oder die mehreren Prozessoren veranlassen, ein Verfahren (400) durchzuführen, das Folgendes beinhaltet:

Erstellen (402) eines Merkmalsraums (208, 308) zum Einbetten einer Vielzahl von Merkmalen;
Erhalten (404) eines markierten Malware-Familiendatensatzes (202, 302), der Proben von ausführbaren Dateien umfasst, wobei jede Probe als zu einer bestimmten Familie von bekannter Malware gehörend markiert ist, wobei Proben von ausführbaren Dateien jeder Malware-Familie von Proben von ausführbaren Dateien jeder anderen Malware-Familie durch ein jeweiliges markiertes Merkmal unterschieden werden;
Extrahieren (406) eines markierten Merkmals (206, 502) aus Proben (450) von ausführbaren Dateien des markierten Malware-Familiendatensatzes (202, 302) für jede markierte Malware-Familie darin;

Bestimmen (408) einer Verlustfunktion (204, 304) zum Einbetten (516) jedes markierten Merkmals des markierten Malware-Familiendatensatzes in den Merkmalsraum (208, 308); und

Trainieren (410) eines einbettenden Lernmodells (200, 300, 400, 500) auf der bestimmten Verlustfunktion.

2. Computerlesbares Speichermedium gemäß Anspruch 1, wobei jede Probe von ausführbaren Dateien des markierten Malware-Familiendatensatzes als eines von mehreren unterschiedlichen Merkmalen aufweisend markiert ist, wobei jedes der unterschiedlichen Merkmale ein Unterscheidungsmerkmal ist, das ausführbare Dateien, die zu einer Malware-Familie gehören, von ausführbaren Dateien unterscheidet, die zu allen anderen Malware-Familien gehören.

3. Computerlesbares Speichermedium gemäß Anspruch 1, wobei für jede Probe (450) von ausführbaren Dateien der Proben der ausführbaren Dateien das markierte Merkmal eine Vielzahl von Bytes beinhaltet, die aus wenigstens einem von einem Header (458), einem ausführbaren Bereich (452), einem Ressourcenbereich (462) und einer Importtabelle (460) der Probe von ausführbaren Dateien abgetastet werden.

4. Computerlesbares Speichermedium gemäß einem der vorhergehenden Ansprüche, wobei die Verlustfunktion eine Triplett-Verlustfunktion (204, 304) ist.

5. Computerlesbares Speichermedium gemäß Anspruch 4, wobei das Trainieren des einbettenden Lernmodells auf der Triplett-Verlustfunktion das Einbetten von Paaren von ankerpositiven Datenpunkten und ankernegativen Datenpunkten in Bezug auf den Ankerdatenpunkt für einen Ankerdatenpunkt der markierten Merkmale beinhaltet.

6. Computerlesbares Speichermedium gemäß Anspruch 5, wobei das Training des einbettenden Lernmodells ferner wenigstens eine erste Trainingsphase beinhaltet, in der die am stärksten positiven Datenpunkte und die am stärksten negativen Datenpunkte von dem Einbetten in Bezug auf den Ankerdatenpunkt ausgeschlossen werden.

7. Computerlesbares Speichermedium gemäß Anspruch 6, wobei das Training des einbettenden Lernmodells ferner eine anschließende Trainingsphase beinhaltet, in der die am stärksten positiven Datenpunkte und die am stärksten negativen Datenpunkte paarweise in Bezug auf den Ankerdatenpunkt eingebettet werden.

8. Ein System (600), das Folgendes beinhaltet:

einen oder mehrere Prozessoren (602); und
einen Speicher (604), der kommunikativ mit dem einen oder den mehreren Prozessoren gekoppelt ist, wobei der Speicher computerausführbare Module speichert, die von dem einen oder den mehreren Prozessoren ausgeführt werden können, die, wenn sie von dem einen oder den mehreren Prozessoren ausgeführt werden, zugeordnete Vorgänge durchführen, wobei die computerausführbaren Module Folgendes beinhalten:

ein Modul (608) zum Erstellen eines Merkmalsraums, das dazu konfiguriert ist, einen Merkmalsraum (208, 308) zum Einbetten einer Vielzahl von Merkmalen zu erstellen (402);
ein Datensatzerhaltungsmodul (610), das dazu konfiguriert ist, einen markierten Malware-Familiendatensatzes (202, 302) zu erhalten (404), der Proben von ausführbaren Dateien umfasst, wobei jede Probe als zu einer bestimmten Familie von bekannter Malware gehörend markiert ist, wobei Proben von ausführbaren Dateien jeder Malware-Familie von Proben von ausführbaren Dateien jeder anderen Malware-Familie durch ein jeweiliges markiertes Merkmal unterschieden werden;
ein Merkmalsextraktionsmodul (612), das dazu konfiguriert ist, ein markiertes Merkmal (206, 502) aus Proben von ausführbaren Dateien (450) des markierten Malware-Familiendatensatzes (202, 302) für jede markierte Malware-Familie darin zu extrahieren (406);
ein Verlustfunktionsbestimmungsmodul (614), das dazu konfiguriert ist, eine Verlustfunktion (204, 304) zum Einbetten jedes markierten Merkmals des markierten Malware-Familiendatensatzes in den Merkmalsraum (208, 308) zu bestimmen; und
ein Modelltrainingsmodul (616), das dazu konfiguriert ist, ein einbettendes Lernmodell (200, 300, 400, 500) auf der bestimmten Verlustfunktion (204, 304) zu trainieren (410).

9. System gemäß Anspruch 8, wobei jede Probe von ausführbaren Dateien der Proben von ausführbaren Dateien als eines von mehreren unterschiedlichen Merkmalen aufweisend markiert ist, wobei jedes der unterschiedlichen Merkmale ein Unterscheidungsmerkmal ist, das ausführbare Dateien, die zu einer Malware-Familie gehören, von ausführbaren Dateien unterscheidet, die zu allen anderen Malware-Familien gehören.

10. System gemäß Anspruch 8, wobei das Merkmalsextraktionsmodul ferner dazu konfiguriert ist, für jede Probe von ausführbaren Dateien der Proben der ausführbaren Dateien ein markiertes Merkmal zu extrahieren, das eine Vielzahl von Bytes beinhaltet, die aus wenigstens einem von einem Header (458), einem ausführbaren Bereich (452), einem Ressourcenbereich (462) und einer Importtabelle (460) der Probe von ausführbaren Dateien abgetastet werden.

11. System gemäß einem der Ansprüche 8 bis 10, wobei die Verlustfunktion eine Triplett-Verlustfunktion (204, 304) ist.

12. System gemäß Anspruch 11, wobei das Modelltrainingsmodul dazu konfiguriert ist, das einbettende Lernmodell auf der Triplett-Verlustfunktion durch das Einbetten von Paaren von ankerpositiven Datenpunkten und ankernegativen Datenpunkten in Bezug auf den Ankerdatenpunkt für einen Ankerdatenpunkt der markierten Merkmale zu trainieren.

13. System gemäß Anspruch 12, wobei das Modelltrainingsmodul dazu konfiguriert ist, das einbettende Lernmodell durch wenigstens eine erste Trainingsphase zu trainieren, in der am stärksten positive Datenpunkte und am stärksten negative Datenpunkte von dem Einbetten in Bezug auf den Ankerdatenpunkt ausgeschlossen werden.

14. System gemäß Anspruch 13, wobei das Modelltrainingsmodul dazu konfiguriert ist, das einbettende Lernmodell durch eine anschließende Trainingsphase zu trainieren, wobei am stärksten positive Datenpunkte und am stärksten negative Datenpunkte paarweise in Bezug auf den Ankerdatenpunkt eingebettet werden.

## Revendications

1. Un support de stockage lisible par ordinateur stockant des instructions lisibles par ordinateur exécutables par un ou plusieurs processeurs (602) qui, lorsqu'elles sont exécutées par les un ou plusieurs processeurs, amènent les un ou plusieurs processeurs à effectuer un procédé (400) comprenant :

   l'établissement (402) d'un espace d'éléments (208, 308) pour l'incorporation d'une pluralité d'éléments ;
   l'obtention (404) d'un ensemble de données de familles de logiciels malveillants étiquetées (202, 302) qui inclut des échantillons de fichiers exécutables, chaque échantillon étant étiqueté comme appartenant à une famille particulière de logiciels malveillants connus, où des échantillons de fichier exécutable de chaque famille de logiciels malveillants se distinguent d'échantillons de fichier exécutable de chaque autre famille de logiciels malveillants par un élément étiqueté respectif ;
   l'extraction (406) d'un élément étiqueté (206, 502) à partir d'échantillons de fichier exécutable (450) de l'ensemble de données de familles de logiciels malveillants étiquetées (202, 302) pour chaque famille de logiciels malveillants étiquetée présente dans celui-ci ;
   la désignation (408) d'une fonction de perte (204, 304) pour l'incorporation (516) de chaque élément étiqueté de l'ensemble de données de familles de logiciels malveillants étiquetées dans l'espace d'éléments (208, 308) ; et
   l'entraînement (410) d'un modèle d'apprentissage d'incorporation (200, 300, 400, 500) sur la fonction de perte désignée.

2. Le support de stockage lisible par ordinateur de la revendication 1, où chaque échantillon de fichiers exécutables de l'ensemble de données de familles de logiciels malveillants étiquetées est étiqueté comme ayant un élément parmi de multiples éléments distincts, où chacun des éléments distincts est un élément de discernement qui distingue des fichiers exécutables appartenant à une famille de logiciels malveillants de fichiers exécutables appartenant à toutes les autres familles de logiciels malveillants.

3. Le support de stockage lisible par ordinateur de la revendication 1, où pour chaque échantillon de fichier exécutable (450) parmi les échantillons de fichier exécutable, l'élément étiqueté comprend une pluralité d'octets échantillonnés à partir d'au moins une section parmi un en-tête (458), une section exécutable (452), une section de ressource (462), et une table d'importation (460) de l'échantillon de fichier exécutable.

4. Le support de stockage lisible par ordinateur de n'importe quelle revendication précédente, où la fonction de perte est une fonction de perte par triplet (204, 304).

5. Le support de stockage lisible par ordinateur de la revendication 4, où l'entraînement du modèle d'apprentissage d'incorporation sur la fonction de perte par triplet comprend l'incorporation, pour un point de données ancre des éléments étiquetés, de paires de points de données ancre-positif et de points de données ancre-négatif par rapport au point de données ancre.

6. Le support de stockage lisible par ordinateur de la revendication 5, où l'entraînement du modèle d'apprentissage d'incorporation comprend en outre au moins une première phase d'entraînement où les points de données positifs les plus durs et les points de données négatifs les plus durs sont exclus de l'incorporation par rapport au point de données ancre.

7. Le support de stockage lisible par ordinateur de la revendication 6, où l'entraînement du modèle d'apprentissage d'incorporation comprend en outre une phase d'entraînement suivante où les points de données positifs les plus durs et les points de données négatifs les plus durs sont incorporés par paires par rapport au point de données ancre.

8. Un système (600) comprenant :

un ou plusieurs processeurs (602) ; et
de la mémoire (604) couplée en communication aux un ou plusieurs processeurs, la mémoire stockant des modules exécutables par ordinateur aptes à être exécutés par les un ou plusieurs processeurs qui, lorsqu'ils sont exécutés par les un ou plusieurs processeurs, effectuent des opérations associées, les modules exécutables par ordinateur comprenant :

un module d'établissement d'espace d'éléments (608) configuré pour établir (402) un espace d'éléments (208, 308) pour l'incorporation d'une pluralité d'éléments ;
un module d'obtention d'ensemble de données (610) configuré pour obtenir (404) un ensemble de données de familles de logiciels malveillants étiquetées (202, 302) qui inclut des échantillons de fichiers exécutables, chaque échantillon étant étiqueté comme appartenant à une famille particulière de logiciels malveillants connus, où des échantillons de fichier exécutable de chaque famille de logiciels malveillants se distinguent d'échantillons de fichier exécutable de chaque autre famille de logiciels malveillants par un élément étiqueté respectif ;
un module d'extraction d'élément (612) configuré pour extraire (406) un élément étiqueté (206, 502) à partir d'échantillons de fichier exécutable (450) de l'ensemble de données de familles de logiciels malveillants étiquetées (202, 302) pour chaque famille de logiciels malveillants étiquetée présente dans celui-ci ;
un module de désignation de fonction de perte (614) configuré pour désigner une fonction de perte (204, 304) pour l'incorporation de chaque élément étiqueté de l'ensemble de données de familles de logiciels malveillants étiquetées dans l'espace d'éléments (208, 308) ; et
un module d'entraînement de modèle (616) configuré pour entraîner (410) un modèle d'apprentissage d'incorporation (200, 300, 400, 500) sur la fonction de perte (204, 304) désignée.

9. Le système de la revendication 8, où chaque échantillon parmi les échantillons de fichiers exécutables est étiqueté comme ayant un élément parmi de multiples éléments distincts, où chacun des éléments distincts est un élément de discernement qui distingue des fichiers exécutables appartenant à une famille de logiciels malveillants de fichiers exécutables appartenant à toutes les autres familles de logiciels malveillants.

10. Le système de la revendication 8, où le module d'extraction d'élément est configuré en outre pour extraire, pour chaque échantillon de fichier exécutable parmi les échantillons de fichier exécutable, un élément étiqueté comprenant une pluralité d'octets échantillonnés à partir d'au moins une section parmi un en-tête (458), une section exécutable (452), une section de ressource (462), et une table d'importation (460) de l'échantillon de fichier exécutable.

11. Le système de n'importe laquelle des revendications 8 à 10, où la fonction de perte est une fonction de perte par triplet (204, 304).

12. Le système de la revendication 11, où le module d'entraînement de modèle est configuré pour entraîner le modèle d'apprentissage d'incorporation sur la fonction de perte par triplet par incorporation, pour un point de données ancre des éléments étiquetés, de paires de points de données ancre-positif et de points de données ancre-négatif par rapport au point de données ancre.

13. Le système de la revendication 12, où le module d'entraînement de modèle est configuré pour entraîner le modèle d'apprentissage d'incorporation au moyen d'au moins une première phase d'entraînement où les points de données positifs les plus durs et les points de données négatifs les plus durs sont exclus de l'incorporation par rapport au point de données ancre.

**14.** Le système de la revendication 13, où le module d'entraînement de modèle est configuré pour entraîner le modèle d'apprentissage d'incorporation au moyen d'une phase d'entraînement suivante où les points de données positifs les plus durs et les points de données négatifs les plus durs sont incorporés par paires par rapport au point de données ancre.

CLOUD
COMPUTING
SYSTEM
100

DATA CENTER 114

SPECIAL-PURPOSE
PROCESSOR(S)
112

LEARNING MODEL
116

DATA CENTER
STORAGE
120

DATA CENTER
MEMORY
122

SECURITY SERVICE 118

CLOUD
NETWORK 102

SERVER NODE
104(1)

SERVER NODE
104(2)

• • •

SERVER NODE
104(N)

EDGE NODE
106(1)

EDGE NODE
106(2)

• • •

EDGE NODE
106(N)

END
DEVICE
108(1)

END
DEVICE
108(2)

END
DEVICE
108(N)

END DEVICE
108(1)

AGENT
110(1)

END DEVICE
108(2)

AGENT
110(2)

END DEVICE
108(N)

AGENT
110(N)

# FIG. 1

FIG. 2

EMBEDDING LEARNING
MODEL
300

LOSS FUNCTION
304

LABELED FAMILY
DATASET(S)
302

LABELED FEATURES
306

FEATURE SPACE
308

FEATURE
EMBEDDING
310

# FIG. 3

400

ESTABLISH A FEATURE SPACE FOR EMBEDDING PLURALITY OF FEATURES
402

OBTAIN A LABELED FAMILY DATASET
404

EXTRACT LABELED FEATURE FROM OBJECT CODE SAMPLES OF LABELED FAMILY DATASET FOR EACH LABELED FAMILY THEREIN
406

DESIGNATE LOSS FUNCTION FOR FEATURE EMBEDDING OF LABELED FEATURES OF LABELED FAMILY DATASET IN FEATURE SPACE
408

TRAIN EMBEDDING LEARNING MODEL ON DESIGNATED LOSS FUNCTION FOR EMBEDDING EACH LABELED FEATURE OF LABELED FAMILY DATASET IN FEATURE SPACE
410

OPTIMIZE TRIPLET LOSS FUNCTION FOR SEMI-HARD TRIPLETS
410A

OPTIMIZE TRIPLET LOSS FUNCTION FOR POSITIVE-HARD NEGATIVE TRIPLETS
410B

OPTIMIZE TRIPLET LOSS FUNCTION FOR HARDEST TRIPLETS
410C

UPDATE WEIGHT SET BASED ON FEATURE EMBEDDING LEARNED BY LEARNING MODEL
412

# FIG. 4A

EXECUTABLE FILE
450

HEADER
458

HEADER
458

HEADER
458

IMPORT TABLE
460

RESOURCE SECTION
462

RESOURCE SECTION
462

OBJECT CODE
452

LINKED OBJECT CODE
454

LINKED LIBRARY
456

# FIG. 4B

FEATURES 502

↓

BYTE EMBEDDINGS
504

↓

CONVOLUTIONAL
LAYER 506

↓

BATCH
NORMALIZATION

↓

LOCAL POOLING
LAYER 510

↓

CONVOLUTIONAL
LAYER 506

↓

BATCH NORM. 508

↓

GLOBAL POOLING
LAYER 512

↓

FEED-FORWARD
LAYER 514

↓

FEED-FORWARD
LAYER 514

↓

BATCH NORM. 508

↓

FEED-FORWARD
LAYER 514

↓

BATCH NORM. 508

↓

⊗

↓

FEED-FORWARD
LAYER 514

↓

FEATURE
EMBEDDING 516

# FIG. 5

**600**

PROCESSOR(S) **602**

SYSTEM MEMORY **604**

MODULES **606**

FEATURE SPACE ESTABLISHING MODULE **608**

LOSS FUNCTION DESIGNATING MODULE **614**

DATASET OBTAINING MODULE **610**

MODEL TRAINING MODULE **616**

FEATURE EXTRACTING MODULE **612**

WEIGHT SET UPDATING MODULE **618**

INPUT/OUTPUT INTERFACE **640**

COMMUNICATION INTERFACE **650**

# FIG. 6

**EP 3 869 363 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62978069
- US 17722021
- US 2019065746 A
- US 2020005082 A1

**Non-patent literature cited in the description**

- **OMID E. DAVID et al.** DeepSign: Deep learning for automatic malware signature generation and classification. *2015 International Joint Conference On Neural Networks (IJCNN)*, 01 July 2015, ISBN 978-1-4799-1960-4, 1-8